# EUROPEAN PATENT SPECIFICATION

(11) **EP 0 760 718 B1**
(45) Date of publication and mention of the grant of the patent: **10.03.1999**
(21) Application number: 95919981.1
(22) Date of filing: 26.05.1995
(51) Int. Cl.: B09C 1/00, A62D 3/00

(54) **APPARATUS FOR THE DECONTAMINATION OF HEAVY METALS CONTAINING SOIL**
VORRICHTUNG ZUR REINIGUNG VON SCHWERMETALLE ENTHALTENDEM BODENMATERIAL
APPAREIL PERMETTANT LA DECONTAMINATION DE TERRES CONTENANT DE METALS LOURDS

(30) Priority: 27.05.1994 DK 60394
(43) Date of publication of application: 12.03.1997
(73) Proprietor: Villumsen, Arne, 3400 Hilleroed (DK)
(72) Inventor: JENSEN, Joergen, Birger, deceased (DK)
(74) Representative: Larsen, Hans Ole
(86) International application number: PCT/DK95/00209
(87) International publication number: WO 95/32816

(56) References cited:
- WO-A-91/01392
- WO-A-95/11095
- US-A- 5 074 986
- US-A- 5 190 628

## Description

### Background of the invention

The invention relates to an apparatus for the cleaning of earth, sludge or the like containing heavy metals by use of the electro-kinetic method, whereby electric current is used to drive the heavy metals towards electrodes where they can be concentrated in an electrolyte solution and thereafter removed, the earth being separated from electrodes in chambers, using a cation-exchange membrane preventing anions from the negative electrode chamber from seeping out into the earth and at the same time allowing passage of positive heavy metal ions from the earth and out into the negative electrode chamber, and also using a second ion-exchange membrane to prevent passage of cations from the positive electrode chamber into the earth and at the same time allow passage of heavy metal ions from the earth to seep out into the positive elctrode chamber.

The need for cleaning soil and areas which are polluted with heavy metals is great and increasing in step with the recognition of the risks which these contaminated areas constitute in both the short and the long view for the environment.

Cleaning, however, is a very complicated and costly process. This means that in the most threatened areas the contaminated earth or sludge must be removed and deposited under controlled conditions for the safety of the surrounding environment.

In other words, the polluted material is isolated and thus the problem of cleaning is postponed until later.

Consequently, there is a great need for a method of cleaning which is suitable for the removal of heavy metals.

Efforts have been made with a so-called electro-kinetic method, whereby electric current is used to drive the heavy metals which exist in the earth in the form of ions towards electrodes where the metal can be concentrated and thereafter removed.

From US 5,190,628 there is known a method for selectively removing species of ions from an area of soil. At least two electrodes are placed in spaced relation with respect to each other and to said area of soil. Permeable membranes impregnated with an ion exchange resin that is specific to one or more species of ions are inserted into the soil adjacent of the electrodes. When an electric potential is applied across the electrodes, the ions to be removed migrate towards the membranes. The membranes are removed from the soil area when they are saturated with ions.

From the description of WO 95/11095 there is known a method for the electrokinetic decontamination of land or other material comprising soil in which a direct current is applied between at least one cathode and at least one anode positioned in or on said soil. The anode is a carbon felt wrapped around current and electrolyte feeders and the cathode is contained in a porous housing through which electrolyte is able to pass. On application of current there is electrokinetic movement of cations and other soil contaminants towards the cathode which pass through the porous housing and into the catholyte. The thus loaded catholyte is circulated through a treatment plant.

Finally from WO 91/01392 there is known a method for removing contaminant material from a soil site. One or more porous source electrodes and porous sink electrodes are positioned within the soil site. A purging liquid is supplied to the source electrodes and when voltage gradients are established between the electrodes, the liquid, displacing the contaminant material, is moved by electroosmosis through the soil towards the sink electrodes from which the contaminant material can be removed.

These known methods and apparatus are, however, all very energy-consuming since the ions from the electrode chambers pass out into the earth and consequently the energy is utilized only for the transport of earth-bound ions to the electrodes.

There thus arises the problem that a considerable part of the process current will be used to convey ions from the one electrode chamber to the other, so that only a smaller part of the power is utilized in the removal of the heavy metals in the earth.

This means that this known method is not particularly effective and, moreover, uneconomic in relation to the costs involved in the removal and the depositing of earth contaminated with heavy metals, which in turn means that the method has not been taken into practical use.

### Advantages of the invention

The apparatus according to the invention comprises an electrode in an electrolyte solution in a chamber separated from a second electrolyte solution in a second chamber by means of ion-exchange membranes, and separates this second electrode chamber from the earth by means of other ion-exchange membranes, whereby an electrode unit which functions satisfactorily is achieved in a surprisingly simple manner.

By using a method whereby the earth is separated from electrodes in chambers, and that there is placed a cation-exchange membrane to prevent anions from the negative electrode chamber from seeping out into the earth and at the same time permit the passage of positive heavy metal ions from the earth and out in the negative electrode chamber, and also placing a second ion exchange membrane to prevent the passage of cations from the positive electrode chamber into the earth and at the same time permit the passage of heavy metal ions from the earth to seep out in the positive electrode chamber, there is achieved the advantage that the ions from the electrode chamber do not pass out into the earth, but remain in the electrolyte solution. The energy is hereby utilized in a far more efficient manner, i.e. solely for the transport of the earth-bound ions to the electrodes, and not for the transport of ions between the electrodes.

According to the invention, it hereby becomes possible to clean products contaminated with heavy metals with a consumption of energy which is particularly competitive with other forms of cleaning, and at the same time to ensure a considerable degree of cleaning effect and herewith the possibility of achieving a degree of cleaning which is surprisingly high.

As disclosed in claim 2, an optimum effect of the electrode is ensured by isolating the electrolyte solution in the electrode chamber from the remaining electrolyte solution.

As disclosed in claim 3, by using a circulating electrolyte solution, this can be pumped to a separate electrode chamber where the heavy metals can be deposited and removed from the electrolyte solution.

Finally, it is expedient, as disclosed in claim 4, to use the apparatus for the cleaning of earth, sludge and the like, in connection with a biological cleaning of the earth.

### Description of the example embodiments

The following is a more detailed description of an example of the apparatus for the execution of the cleaning method.

The apparatus, which comprises an electrode etc., is configured as a unit which innermost comprises an electrode element which is connected to a power supply which, for example, is negative.

Around the electrode element there is arranged a closed chamber which is filled with an electrolyte solution of a commonly-known kind, such as a sodium-nitrate solution, which is electrically conductive.

In or on the side walls of the chamber there is mounted an ion exchange membrane which is charge selective. In the example described, it is positive. The membrane can be made of any suitable supportive and chemically resistant material which is not electrically conductive.

The chamber wall can be configured of membrane material, merely providing that this is of adequate strength. The material used can be known cellular ceramic materials and the like.

The charge-selective ion-exchange membranes are in contact with an additional electrolyte solution which extends around the outer wall of the electrode chamber, said solution extending in a closed chamber which constitutes the exterior of the unit.

It should be noted that the electrolyte solution around the electrode is separated from the circulating solution.

The outer chamber is outermost defined by additional charge-selective ion-exchange membranes, which in the example described are negatively charged.

Similarly, these membranes can also be configured to form the outer wall.

During operation, the unit is submerged in the product which is required to be cleaned, and which can be earth or the like such as sludge, sediments, cleaning residuals etc., which are contaminated with heavy metals.

The unit can be in liquid connection with a collection vessel for circulating electrolyte solution. During operation, the heavy-metal ions will be concentrated in the solution in the unit, and by passing electrodes which are placed in the vessel, and in the described example with each its charge, the ions upon passing these electrodes will be precipitated. In this manner the metals can be removed, and the solution can be recirculated to the unit.

The following is a description of the method:

When the units are placed in the product which is required to be cleaned, the power supply and the electrolyte solution are established as described earlier.

There is thus established a plant which functions as an electro-kinetic heavy-metal cleaning method for heavy metals.

The contaminated product is separated from the electrode chambers in such a manner that the cation-exchange membrane prevents anions from the negative electrode chamber from seeping out in the contaminated product, which can be earth, but at the same time allows the positive heavy-metal ions to pass from the product, the earth, out in the negative electrode chamber.

At the same time, the anion-exchange membrane prevents cations from the positive electrodes from passing into the product, the earth, but allows the passage of negative heavy-metal ions from the product to seep into the positive electrode chamber in the unit.

There is hereby ensured the best possible utilization of the current, which makes the method and the means particularly competitive when compared with other known methods of cleaning.

To this can be added that the precipitation of the heavy metals which occurs is so effective that these can be reused and hereby contribute in a positive manner to the profitability of the plant.

The method and the apparatus according to the invention can therefore with advantage be used directly in the contaminated product such as earth, sludge, sedimentations in tanks and the like.

In this connection is should be noted that the units can be provided with several separate electrolyte solutions and ion-selective membranes, hereby enabling a selective cleaning of specific metal ions to be achieved.

Finally, the method can be used in connection with other methods of cleaning, e.g. in connection with a biological cleaning, where the heat developed by the method is utilized to further the biological cleaning process.

## Claims

1. Apparatus for the cleaning of earth, sludge or the like containing heavy metals by use of the electro-kinetic method, whereby electric current is used to drive the heavy metals towards electrodes where they can be concentrated in an electrolyte solution and thereafter removed, the earth being separated from electrodes in chambers, using a cation-exchange membrane preventing anions from the negative electrode chamber from seeping out into the earth and at the same time allowing passage of positive heavy metal ions from the earth and out into the negative electrode chamber, and also using a second ion-exchange membrane to prevent passage of cations from the positive electrode chamber into the earth and at the same time allow passage of heavy metal ions from the earth to seep out into the positive elctrode chamber, **characterized** in that the electrode is placed in an electrolyte solution in a chamber, said chamber being separated from a second electrolyte solution chamber by means of charge-selective ion-exchange membranes, and in that the second electrolyte solution chamber is separated from the earth by means of other charge-selective ion-exchange membranes.

2. Apparatus according to claim 1, **characterized** in that the electrolyte solution in the chamber with the electrode is isolated from the electrolyte solution in the second chamber.

3. Apparatus according to claims 1 and 2, **characterized** in that the electrolyte solution in the second chamber can be led out to a collection vessel with electrodes for the separation of the heavy metals, after which the electrolyte solution can be recirculated to the chamber.

## Patentansprüche

1. Vorrichtung zur Reinigung von Schwermetalle enthaltender Erde, Schlamm oder Ähnlichem durch Anwendung des elektrokinetischen Verfahrens, wobei elektrischer Strom angewandt wird, um die Schwermetalle zu Elektroden hin zu treiben, wo diese in einer Elektrolytlösung konzentriert und anschließend entfernt werden können, wobei die Erde von den Elektroden in Kammern getrennt ist, unter Verwendung einer Kationaustauschmembran, die verhindert, daß Anionen aus der negativen Elektrodenkammer in die Erde hinaussickern und die gleichzeitig ein Durchtreten der positiven Schwermetallionen von der Erde und hinaus in die negative Elektrodenkammer erlaubt, und unter weiterer Verwendung einer zweiten Ionenaustauschmembran, um das Durchtreten von Kationen aus der positiven Elektrodenkammer in die Erde zu verhindern und zur gleichen Zeit ein Durchtreten der Schwermetallionen aus der Erde zu erlauben, damit diese in die positive Elektrodenkammer hinaussickern,
dadurch gekennzeichnet, daß
die Elektrode in einer Elektrolytlösung in einer Kammer plaziert ist, wobei die Kammer von einer zweiten Elektrolytlösungskammer mittels ladungsselektiver Ionenaustauschmembranen getrennt ist, und daß die zweite Elektrolytlösungskammer von der Erde mittels anderer ladungsselektiver Ionenaustauschmembranen getrennt ist.

2. Vorrichtung nach Anspruch 1,
dadurch gekennzeichnet, daß
die Elektrolytlösung in der Kammer mit der Elektrode von der Elektrolytlösung in der zweiten Kammer isoliert ist.

3. Vorrichtung nach Anspruch 1 und 2,
dadurch gekennzeichnet, daß
die Elektrolytlösung in der zweiten Kammer in einen Sammelkessel mit Elektroden für die Trennung von Schwermetallen ausgelassen werden kann und danach die Elektrolytlösung in die Kammer zurückgeführt werden kann.

## Revendications

1. Appareil pour le nettoyage de la terre, des boues ou analogues contenant des métaux lourds, en utilisant un procédé électro-cinétique, dans lequel on utilise un courant électrique pour entraîner les métaux lourds en direction d'électrodes où ils sont concentrés dans une solution d'électrolyte et ensuite éliminés, la terre étant séparée des électrodes dans des chambres, en utilisant une membrane échangeuse de cations qui empêche les anions provenant de la chambre de l'électrode négative de filtrer en pénétrant dans la terre, et simultanément permettant le passage des ions de métal lourd positifs provenant de la terre et leur pénétration dans la chambre d'électrode négative, et utilisant également une seconde membrane échangeuse d'ions pour empêcher le passage de cations provenant de la chambre d'électrode positive à l'intérieur de la terre, et simultanément pour permettre le passage des ions de métal lourd provenant de la terre pour qu'ils filtrent en pénétrant dans la chambre d'électrode positive, caractérisé en ce que l'électrode est placée dans une solution d'électrolyte dans une chambre, ladite chambre étant séparée d'une seconde chambre de solution d'électrolyte au moyen de membranes échangeuses d'ions à charge sélective, et en ce que la seconde chambre de solution d'électrolyte est séparée de la terre au moyen d'autres membranes échangeuses d'ions à charge sélective.

2. Appareil selon la revendication 1, caractérisé en ce que la solution d'électrolyte dans la chambre comportant l'électrode est isolée de la solution d'électrolyte dans la seconde chambre.

3. Appareil selon les revendications 1 et 2, caractérisé en ce que la solution d'électrolyte dans la seconde chambre peut être recueillie vers un récipient de collecte avec des électrodes pour la séparation des métaux lourds, après quoi la solution d'électrolyte peut être recirculée vers la chambre.
